# EUROPÄISCHE PATENTSCHRIFT

(11) **EP 1 342 041 B1**
(45) Veröffentlichungstag und Bekanntmachung des Hinweises auf die Patenterteilung: **02.02.2005**
(21) Anmeldenummer: 01995636.6
(22) Anmeldetag: 15.11.2001
(51) Int. Cl.: F25D 27/00, F25D 23/00, F25D 23/06, F21S 8/02, B29C 44/12, F21V 17/00, F21V 17/16

(54) **VERFAHREN ZUM SCHAUMDICHTEN BEFESTIGEN EINES KÖRPERS AN EINER WAND**
METHOD FOR FIXING A BODY TO A WALL, WITH A FOAM SEAL
PROCEDE DE FIXATION D'UN CORPS SUR UNE PAROI, AVEC ETANCHEITE ASSUREE PAR UNE MOUSSE

(30) Priorität: 24.11.2000 DE 10058400
(43) Veröffentlichungstag der Anmeldung: 10.09.2003
(73) Patentinhaber: BSH Bosch und Siemens Hausgeräte GmbH, 81739 München (DE)
(72) Erfinder: OSBAR, Bernd, 73430 Aalen (DE)
(86) Internationale Anmeldenummer: PCT/EP2001/013244
(87) Internationale Veröffentlichungsnummer: WO 2002/042700

(56) Entgegenhaltungen:
- FR-A- 2 734 086
- US-A- 5 560 695

## Beschreibung

Die vorliegende Erfindung betrifft ein Verfahren zum Befestigen eines Körpers an einer Wand und eine Wand mit einem daran befestigten Körper.

Bei den Gehäusewänden von elektrischen Geräten, insbesondere bei den Innenverkleidungen von Kältegeräten, stellt sich häufig das Problem, dass beim Zusammenbau eines solchen Geräts ein Fremdkörper in eine Öffnung der Innenverkleidung dicht eingefügt werden muss. Die Dichtigkeit der Verbindung zwischen der Innenverkleidung und dem Körper ist wichtig, weil nach der Montage der Innenverkleidung ein sich zwischen der Innenverkleidung und der Außenhaut des Geräts erstreckender Zwischenraum mit einem thermisch isolierenden Schaum gefüllt werden muss und dieser Schaum nicht durch Fugen der Innenverkleidung dringen darf.

Als Verfahren zum dichten Befestigen eines Körpers an einer Öffnung einer Kunststoffplatte, wie sie im allgemeinen für die Innenverkleidung von Kältegeräten eingesetzt wird, sind Ultraschallschweißen und Reibschweißen bekannt Der Einsatz dieser Verfahren ist kostspielig durch die Investitions- und Wartungskosten der hierfür benötigten Geräte. Außerdem sind die Anwendungsmöglichkeiten dieser Verfahren eingeschränkt, da in den meisten Fällen die Innenverkleidung und der daran zu befestigende Körper aus dem gleichen Material bestehen müssen und die Herstellung einer festen Verbindung auch bei gleichen Materialien schwierig sein kann, wenn die zu verbindenden Bereiche der Innenverkleidung und des Körpers unterschiedliche Materialstärken haben.

Dieses Verfahren hat zwar den Vorteil, dass eine dichte Verbindung zwischen der Innenverkleidung und dem eingefügten Körper entsteht, die Einschränkungen bei der Wahl der möglichen Werkstoffe für den Körper macht das Verfahren jedoch für viele praktische Anwendungen ungeeignet. Ein Problem, das sich beim Bau von Kältegeräten regelmäßig stellt, ist die Anbringung der inneren Beleuchtung an der Innenverkleidung des Kältegeräts. Zur Innenraumbeleuchtung werden bevorzugt Halogenleuchten eingesetzt, da diese sehr kompakt sind und im Vergleich zu einer herkömmlichen Glühbirne bei gleicher Lichtausbeute eine geringere Wärmeleistung aufweisen. Ein Nachteil der Halogenlampen ist jedoch, dass sie eine sehr hohe Oberflächentemperatur erreichen und daher nur in einer Fassung aus einem gegen hohe Temperaturen beständigen Material eingesetzt werden können, das sich durch Reibschweißen oder Ultraschallschweißen nicht in einer Wandöffnung der Innenverkleidung befestigen läßt.

Ein Verfahren zum Befestigen eines Körpers an einer Öffnung der Innenverkleidung, das zum Anbringen einer Innenraumbeleuchtung eines Kältegeräts geeignet ist, ist das Verrasten des Körpers an einer in die Verkleidung geschnittenen Öffnung solche Verfahren sind beispielsweise aus US 5,560,695 oder FR-A-2 734 086 bekannt. Hier unterliegt die Wahl des Werkstoffs für den Körper keinen speziellen Einschränkungen, allerdings wird durch die Verrastung an der Öffnung allein keine befriedigende Dichtigkeit erreicht, so dass es beim Hinterfüllen der Innenverkleidung mit dem thermisch isolierenden Schaum zum Austreten von Schaum im Verbindungsbereich zwischen dem Körper und der Innenverkleidung kommen kann. Um dies zu vermeiden, muss der Randbereich abgeklebt werden, was mit kostspieliger Handarbeit verbunden ist.

Aufgabe der vorliegenden Erfindung ist, ein Verfahren zum Befestigen eines Körpers an einer Wand, die eine von einer Verkleidung abgedeckte Schicht aus einem Füllmaterial umfasst, zu schaffen, mit dem eine für das Füllmaterial dichte Verbindung zwischen der Verkleidung und dem Körper auf einfache Weise hergestellt werden kann. Aufgabe der Erfindung ist ferner, eine Wand mit einem daran angefügten Körper anzugeben, bei dem eine für das Füllmaterial dichte Verbindung zwischen Verkleidung und Körper auf einfache Weise herstellbar ist.

Die Aufgaben werden gelöst durch ein Verfahren nach Anspruch 1 bzw. eine Innenverkleidung nach Anspruch 7.

Weiterentwicklungen des Verfahrens und der Innenverkleidung ergeben sich aus den abhängigen Ansprüchen.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: einen Schnitt durch eine Seitenwand eines Kältegeräts mit einer zur Aufnahme eines Körpers nach dem erfindungsgemäßen Verfahren vorbereiteten Innenverkleidung;
- Fig. 2: eine Abwandlung der Innenverkleidung aus Fig. 1;
- Fig.3: einen Schnitt durch eine Innenverkleidung mit einem daran montierten Körper gemäß einer bevorzugten Ausgestaltung der Erfindung;
- Fig. 4: eine Draufsicht auf die dem isolierenden Schaumstoffmaterial zugewandte Seite der innenverkleidung aus Fig. 3 mit dem daran montierten Körper;
- Fig. 5: einen Schnitt durch eine Oberseiten-Innenverkleidung eines Kältegeräts mit einem daran montierten Kaltluftkanal gemäß der Erfindung.

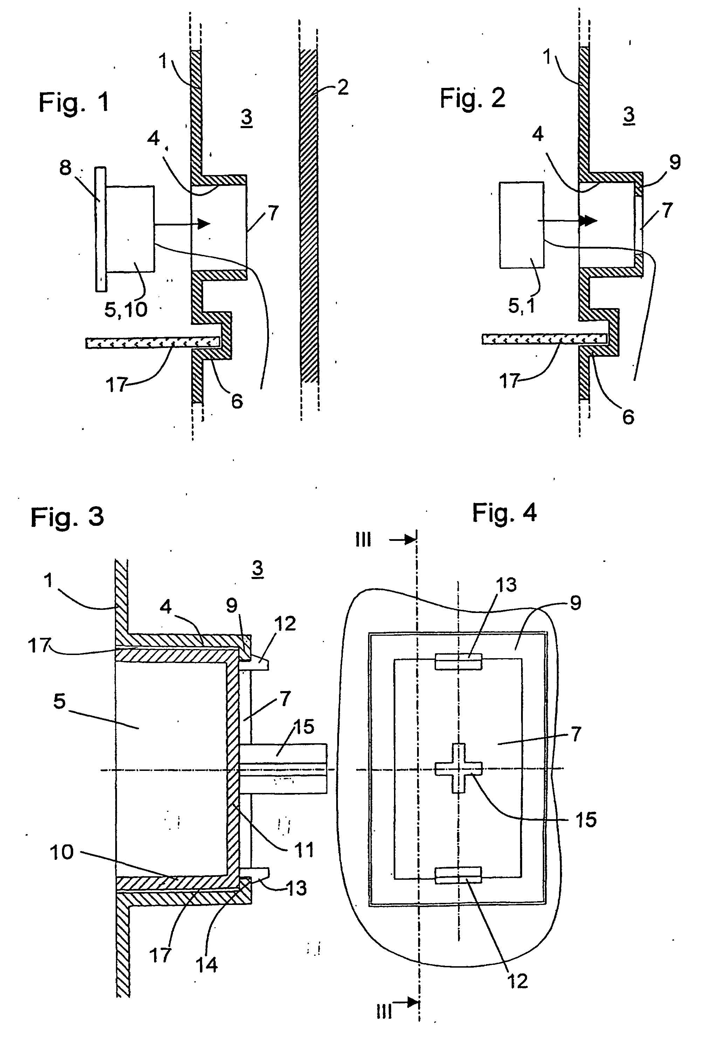

Fig. 1 zeigt einen schematischen Schnitt durch eine Seitenwand eines Kältegeräts. Die Seitenwand umfasst eine Innenverkleidung 1, die durch Ziehen von Kunststoff-Flachmaterial geformt ist, eine Außenhaut 2, z.B. aus lackiertem Blech, und einen Zwischenraum 3 zwischen beiden, der vorgesehen ist, um im Laufe des Zusammenbaus des Kältegeräts mit einem thermisch isolierenden Schaumstoffmaterial gefüllt zu werden.

Fig. 1 zeigt eine an die Innenverkleidung 1 angeformte, zum Zwischenraum 3 hin offene Hülse 4. Der Querschnitt dieser Hülse ist so festgelegt, dass sie mit einem geringen, herstellungsbedingten Spiel in der Lage ist, einen Körper 10, hier eine Fassung 5 für die Innenraumbeleuchtung des Kältegeräts aufzunehmen.

Die Hülse 4 wird an der Innenverkleidung 1 in einem Arbeitsgang mit dem Ziehen der Innenverkleidung 1 aus dem Kunststoff-Flachmaterial geformt. Hierzu ist ein zum Ziehen der Innenverkleidung 1 verwendeter (nicht dargestellter) Stempel mit einem Schieber versehen, der zeitgleich mit anderen Schiebern ausgefahren wird, die in herkömmlicher Weise eingesetzt werden, um Auflagenuten 6 für Platten 17 zu schaffen, die den Innenraum des Kältegeräts in mehrere Fächer unterteilen. Die Innenverkleidung 1 im Bereich, in dem die Hülse angeformt werden soll, kann vor dem Ausfahren des Schiebers vorgelocht oder in anderer Weise abgeschwächt sein, so dass sich beim Formen der Hülse 4 die Öffnung 7 an dem dem Zwischenraum 3 zugewandten Ende der Hülse 4 selbsttätig aufweitet; denkbar ist aber auch, die Öffnung 7 nach dem Formen der Hülse 4 zu schneiden.

Selbstverständlich kann eine entsprechende Hülse auch an der Rückwand der Innenverkleidung eines Kältegeräts vorgesehen werden. In einem solchen Fall ist die Verwendung eines Schiebers zum Ausformen der,Hülse nicht erforderlich.

In der so gebildeten Hülse 4 kann anschließend die Lampenfassung 5 montiert werden. Bei dem in Fig. 1 gezeigten Beispiel weist die Fassung 5 eine umlaufende Krempe 8 auf, die vorgesehen ist, um in montiertem Zustand an der Innenseite der Innenverkleidung 1 anzuliegen. Diese Fassung kann aus beliebigen Materialien gefertigt sein, die die notwendige Hitzebeständigkeit für die Anbringung in der Nähe einer Halogenbirne besitzen. Um die Fassung 5 an der Innenverkleidung 1 zu fixieren, genügt es, an der Fassung 5 und/oder der Hülse 4 wenigstens lokal einen Klebstoff aufzutragen, der nach dem Abbinden beide Teile fest zusammenhält.

Nach Anbringung der Fassung 5 wird die Innenverkleidung 1 mit der Außenhaut 2 zusammengefügt, und der resultierende Zwischenraum 3 zwischen beiden wird mit Schaumstoffmaterial ausgefüllt. Dieses Schaumstoffmaterial ist zunächst zähflüssig und erstarrt nach einer gewissen Zeit zu einer festen Masse. Da die Hülse 4 und der Körper 10 über die Länge der Hülse 4 hinweg eng aneinander anliegen, kann das Schaumstoffmaterial allenfalls in sehr kleinen Mengen in zwischen der Hülse 4 und der Fassung 5 verbleibende Spalte eindringen, infolge seiner Viskosität wirkt es dabei jedoch selbstdichtend, so dass es nicht bis an die Innenseite der Innenverkleidung 1 durchdringen kann und schließlich in den Spalten erstarrt. Die maximale Breite, die diese Spalte haben dürfen, um ein Durchdringen des Schaumstoffmaterials an die Innenseite zu verhindern, hängt von der Art, insbesondere der Viskosität des Schaumstoffmaterials, von seinem Erstarrungsverhalten und von der Länge der Strecke ab, auf der entlang der Achse der Hülse 4 die Hülse 4 und die Fassung 5 eng aneinander liegen. Die Viskosität kann auch von den Verarbeitungsbedingungen des Schaumstoffmaterials abhängen. Eine allgemeine Regel, wie groß die Spalte zwischen Hülse 4 und Fassung 5 sein dürfen, kann daher nicht angegeben werden. Es ist aber ohne Schwierigkeiten möglich, für eine gegebene Gestalt der Hülse bzw. der Fassung und ein bestimmtes Schaumstoffmaterial experimentell die Toleranzen in den Abmessungen von Fassung 5 und Hülse 4 zu bestimmen, die eingehalten werden müssen, um ein Durchtreten des Schaumstoffmaterials zu verhindern.

Wenn die Fertigungstoleranzen der Hülse 4 und des Körpers 10 gering genug sind, kann unter Umständen allein durch Klemmung der zwei Teile aneinander ein ausreichend fester Sitz des Körpers 10 erreicht werden, so dass sich die Verwendung eines Klebstoffs erübrigt. Dabei kann sich eine zusätzliche Verankerung des Körpers 10 nach der Montage durch eine Klebhaftung an dem eingefüllten Schaumstoffmaterial im Zwischenraum 3 und in den Spalten ergeben.

Fig. 2 zeigt eine Abwandlung der Innenverkleidung 1 und des Körpers 10 aus Fig. 1. Hier ist die umlaufende Krempe 8 an dem Körper 10 fortgelassen; statt dessen weist die Hülse 4 an ihrem dem Zwischenraum 3 zugewandten Ende einen ringförmig um die Öffnung 7 umlaufenden Vorsprung 9 auf, der einen Anschlag für den Körper 10 bildet. Mit dieser Ausgestaltung ist es möglich, den Körper 10 mit einer mit der Innenverkleidung 1; absolut bündigen Innenseite zu montieren.

Fig. 3 zeigt im Schnitt eine bevorzugte Ausgestaltung eines Körpers 10, montiert in einer Hülse 4 von im Fig. 2 gezeigten Typ, mit Vorsprung 9 am Boden der Hülse 4. Der Körper 10 ist hier als ein zum Innenraum des Kältegeräts hin offener Becher dargestellt. Ein solcher Becher kann z.B. zur Aufnahme einer Innenraumbeleuchtung dienen; es liegt auf der Hand, dass je nach Zweck, für den der Körper 10 (vereinheitlichen) vorgesehen ist, völlig abweichende Formgebungen möglich sind. Der Körper 10 trägt an seiner dem Zwischenraum 3 zugewandten Bodenfläche 11 zwei flexible Rasthaken 12, jeweils mit einer Schrägfläche 13, die beim Einführen des Körpers 10 in die Hülse 4 am Rand des Vorsprungs 9 entlang gleitet und dabei den Rasthaken 12 auslenkt, und mit einer Haltefläche 14, die nach dem Durchgang des Rasthakens 12 durch die Öffnung 7 an der Rückseite des Vorsprungs 9 zu liegen kommt und den Körper 10 so fest in der Hülse 4 verankert hält.

Spalte zwischen der Hülse 4 und dem Körper 10, in die beim Ausfüllen des Zwischenraums 3 mit Schaumstoffmaterial ein Teil davon eindringen kann, sind mit 17 bezeichnet.

Fig. 4 zeigt eine Draufsicht auf die Bodenfläche 11 und die Hülse 4, gesehen aus der Richtung des Zwischenraums 3. Man erkennt hier wie auch in Fig. 3, dass an die Bodenfläche 11 ein Anker 15 mit einem kreuzförmigen Querschnitt angeformt ist, der nach Ausfüllen des Zwischenraums 3 von dessen Schaumstoffmaterial umgeben ist. Der Anker 15 sorgt so, zusätzlich zu dem Halt des Körpers 10 an der Innenverkleidung durch die Rasthaken 12, für einen festen Halt auch in dem Schaumstoffmaterial.

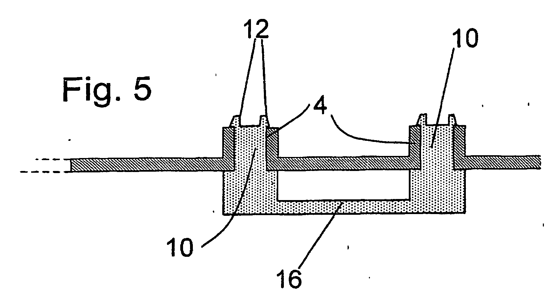

Als ein weiteres Anwendungsbeispiel ist in Fig. 5 ein Schnitt durch eine Innenverkleidung 1 an der Decke eines Kältegerät-Innenraums gezeigt. An dieser Innenverkleidung sind mehrere Hülsen 4 angeformt, von denen in dem Schnitt zwei gezeigt sind, und die zur Verankerung eines Kaltluftkanals 16 dienen. Über diesen Kaltluftkanal 16 wird an einem entfernten Verdampfer gekühlte Luft dem Innenraum des Kältegeräts zugeführt und über eine Mehrzahl von in der Fig. nicht gezeigten Öffnungen abgegeben. Die in die Hülsen 4 eingeführten Körper 10 können einstückig mit dem Rest des Kaltluftkanals 16 ausgebildet sein, es kann sich aber auch um getrennte Bedienungselemente handeln, die z.B. durch vorgeformte Bohrungen des Kaltluftkanals 16 in die Hülsen 4 einführbar sind, um den Kaltluftkanal zu fixieren.

Derartige Befestigungselemente können auch für die Anbringung anderer Gegenstände im Innern des Kältegeräts eingesetzt werden, z.B. als Trägerelement für einen Verdampfer oder dergleichen.

Selbstverständlich ist das hier gezeigte Befestigungsverfahren nicht auf die dargestellten Anwendungen beschränkt. Vielmehr eignet es sich zur schnellen und einfachen Montage von Fremdkörpern beliebiger Art an einer Verkleidung mit begrenztem Eigentragvermögen, die an einer Seite mit Schaumstoffmaterial oder einem anderen viskosen, verfestigenden Material hinterfüllt werden soll.

## Patentansprüche

1. Verfahren zum Befestigen eines Körpers (10) an einer Wand, mit den Schritten:
Anformen einer Hülse (4) an eine Verkleidung (1) der Wand, wobei die Gestalt der Hülse (4) an die Gestalt des Körpers (10) mit einer definierten Genauigkeit angepasst ist, um diesen unter Ausbildung enger Spalte (17) zwischen Hülse (4) und Körper (10) aufzunehmen;
Einfügen des Körpers (10) in die Hülse (4);
Befestigen des Körpers (10) in der Hülse (4)
Anbringen eines viskosen, sich verfestigenden, Füllmaterials an einer Seite der Verkleidung (1), wobei die Genauigkeit so festgelegt ist, dass in die Spalte (17) eindringendes Füllmaterial in den Spalten (17) verfestigt, bevor es die andere Seite der Verkleidung (1) erreicht.

2. Verfahren nach einem der vorhergehenden Ansprüche, **dadurch gekennzeichnet, dass** an die Hülse (4) ein die Öffnung (7) begrenzender Vorsprung (9) angeformt wird, der beim Einfügen des Körpers (10) als Anschlag wirkt.

3. Verfahren nach einem der vorhergehenden Ansprüche, **dadurch gekennzeichnet, dass** die Befestigung des Körpers (10) in der Hülse (4) durch Klemmen, Kleben und/oder Verrasten erfolgt.

4. Verfahren nach einem der vorhergehenden Ansprüche, **dadurch gekennzeichnet, dass** wenigstens ein Rasthaken (12) des Körpers (10) beim Einfügen in die Hülse (4) am Rand der Öffnung (7) einrastet.

5. Verfahren nach einem der vorhergehenden Ansprüche, **dadurch gekennzeichnet, dass** es an einer Verkleidung (1) aus einem Kunststoffmaterial eingesetzt wird.

6. Verfahren nach einem der vorhergehenden Ansprüche, **dadurch gekennzeichnet, dass** das Füllmaterial ein thermisch isolierender Schaum ist.

7. Wand mit einer von einer Verkleidung (1) abgedeckten Schicht aus einem Füllmaterial, mit einem an eine Öffnung (7) der Vermeidung (1) angefügten Körper (10), **dadurch gekennzeichnet, dass** Spalte (17) zwischen dem Körper (10) und einer an die Verkleidung (1) angeformten Hülse (4) wenigstens auf einem Teil ihrer Länge mit dem Füllmaterial gefüllt sind.

8. Wand nach Anspruch 7, **dadurch gekennzeichnet, dass** das Füllmaterial ein thermisch isolierender Schaum ist.

9. Wand nach Anspruch 7 oder 8, **dadurch gekennzeichnet, dass** der Körper (10) wenigstens einen mit dem Rand der Öffnung (7) im Eingriff stehenden Rasthaken (12) aufweist.

10. Wand nach einem der Ansprüche 7 bis 9, **dadurch gekennzeichnet, dass** der Körper (10) einen die Öffnung (7) durchgreifenden Anker (15) zum Verankern in dem Füllmaterial aufweist.

11. Wand nach einem der Ansprüche 7 bis 9, **dadurch gekennzeichnet, dass** der Körper (10) aus einem anderen Material als dem der Verkleidung (1) hergestellt ist.

12. Wand nach Anspruch 11, **dadurch gekennzeichnet, dass** der Körper (10) aus einem temperaturbeständigeren Material als dem der Verkleidung (1) hergestellt und geformt ist, um eine Wärmequelle aufzunehmen.

13. Wand nach einem der Ansprüche 7 bis 12, **dadurch gekennzeichnet, dass** sie Teil eines Kältegeräts ist

14. Wand nach Anspruch 13, **dadurch gekennzeichnet, dass** der Körper (10) ein Befestigungselement für einen im Innenraum des Kältegeräts montierten Gegenstand, insbesondere für einen Luftführungskanal (16) oder einen Verdampfer, ist.

15. Wand nach einem der Ansprüche 7 bis 13, **dadurch gekennzeichnet, dass** der Körper (10) eine Fassung (5) für eine Lichtquelle ist.

## Claims

1. Method of fastening a body (10) to a wall, comprising the steps: forming a sleeve (4) at a lining (1) of the wall, wherein the shape of the sleeve (4) is matched to the shape of the body (10) with a defined accuracy in order to receive this with formation of narrow gaps (17) between sleeve (4) and body (10); inserting the body (10) into the sleeve (4); fastening the body (10) in the sleeve (4); and applying a viscous, self-solidifying filler material to one side of the lining (1), wherein the accuracy is established in such a manner that filler material penetrating into the gaps (17) solidifies in the gaps (17) before it reaches the other side of the lining (1).

2. Method according to one of the preceding claims, **characterised in that** a projection (9) which bounds the opening (7) and acts as an abutment on insertion of the body (10) is formed at the sleeve (4).

3. Method according to one of the preceding claims, **characterised in that** fastening of the body (10) in the sleeve (4) is carried out by wedging, gluing and/or detenting.

4. Method according to one of the preceding claims, **characterised in that** at least one detent hook (12) of the body (10) detents at the edge of the opening (7) on insertion into the sleeve (4).

5. Method according to one of the preceding claims, **characterised in that** it is used at a lining (1) of a synthetic material.

6. Method according to one of the preceding claims, **characterised in that** the filler material is a thermally insulating foam.

7. Wall with a layer, which is covered by a lining (1), of a filler material, with a body (10) attached at an opening (7) of the lining (1), **characterised in that** gaps (17) between the body (10) and a sleeve (4) formed at the lining (1) are filled with the filler material to at least part of their length.

8. Wall according to claim 7, **characterised in that** the filler material is a thermally insulating foam.

9. Wall according to claim 7 or 8, **characterised in that** the body (10) comprises at least one detent hook (12) disposed in engagement with the edge of the opening (7).

10. Wall according to one of claims 7 to 9, **characterised in that** the body (10) comprises an anchor (15), which engages through the opening (7), for anchoring in the filler material.

11. Wall according to one of claims 7 to 9, **characterised in that** the body (10) is made from a material different from that of the lining (1).

12. Wall according to claim 11, **characterised in that** the body (10) is made and formed from a material which is more temperature-resistant than that of the lining (1) in order to accept a heat source.

13. Wall according to one of claims 7 to 12, **characterised in that** it is part of a refrigerating appliance.

14. Wall according to claim 13, **characterised in that** the body (10) is a fastening element for an object mounted in the interior space of the refrigerating appliance, particularly for an air guide channel (16) or an evaporator.

15. Wall according to one of claims 7 to 13, **characterised in that** the body (10) is a mount (5) for a light source.

## Revendications

1. Procédé de fixation d'un corps (10) sur une paroi, qui comprend les étapes qui consistent à:
- former une gaine (4) sur un habillage (1) de la paroi, la forme de la gaine (4) étant adaptée à la forme du corps (10) avec une précision définie pour recevoir ce dernier en formant un étroit interstice (17) entre la gaine (4) et le corps (10),
- insérer le corps (10) dans la gaine (4),
- fixer le corps (10) dans la gaine (4),
- installer sur un côté de l'habillage (1) un matériau de remplissage visqueux et qui se solidifie, la précision étant définie de telle sorte que le matériau de remplissage qui pénètre dans l'interstice (17) se solidifie dans les interstices (17) avant d'atteindre l'autre côté de l'habillage (1).

2. Procédé selon l'une des revendications précédentes, **caractérisé en ce que** sur la gaine (4) est formée une saillie (9) qui limite l'ouverture (7) et qui sert de butée lors de l'insertion du corps (10).

3. Procédé selon l'une des revendications précédentes, **caractérisé en ce que** la fixation du corps (10) dans la gaine (4) s'effectué par serrage, collage et/ou encliquetage.

4. Procédé selon l'une des revendications précédentes, **caractérisé en ce qu'**au moins un crochet d'encliquetage (12) du corps (10) s'encliquète sur le bord de l'ouverture (7) lors de l'insertion dans la gaine (4).

5. Procédé selon l'une des revendications précédentes, **caractérisé en ce qu'**il est utilisé sur un habillage (1) constitué d'une matière synthétique.

6. Procédé selon l'une des revendications précédentes, **caractérisé en ce que** le matériau de remplissage est une mousse thermiquement isolante.

7. Paroi dotée d'une couche en matériau de remplissage, recouverte d'un habillage (1), un corps (10) étant joint à une ouverture (7) de l'habillage (1), **caractérisée en ce qu'**entre le corps (10) et une gaine (4) formée sur l'habillage (1), l'interstice est rempli de matériau de remplissage au moins sur une partie de sa longueur.

8. Paroi selon la revendication 7, **caractérisée en ce que** le matériau de remplissage est une mousse thermiquement isolante.

9. Paroi selon les revendications 7 ou 8, **caractérisée en ce que** le corps (10) présente au moins un crochet d'encliquetage (12) qui s'engage sur le bord de l'ouverture (7).

10. Paroi selon l'une des revendications 7 à 9, **caractérisée en ce que** le corps (10) présente un ancrage (15) qui traverse l'ouverture (7) pour s'ancrer dans le matériau de remplissage.

11. Paroi selon l'une des revendications 7 à 9, **caractérisée en ce que** le corps (10) est réalisé en un autre matériau que l'habillage (1).

12. Paroi selon la revendication 11, **caractérisée en ce que** le corps (10) est réalisé en un matériau qui résiste à de plus hautes températures que l'habillage (1) et est formé pour loger une source de chaleur.

13. Paroi selon l'une des revendications 7 à 12, **caractérisée en ce qu'**elle fait partie d'un réfrigérateur.

14. Paroi selon la revendication 13, **caractérisé en ce que** le corps (10) est un élément de fixation pour un objet monté dans l'espace intérieur du réfrigérateur, en particulier pour un canal (16) de guidage d'air ou un évaporateur.

15. Paroi selon l'une des revendications 7 à 13, **caractérisée en ce que** le corps (10) est une monture (5) pour une source de lumière.
